# EUROPÄISCHE PATENTANMELDUNG

(11) **EP 2 886 391 A1**
(43) Veröffentlichungstag der Anmeldung: **24.06.2015**
(21) Anmeldenummer: 13198386.8
(22) Anmeldetag: 19.12.2013
(51) Int. Cl.: B60P 7/08

(54) **Ladungssicherungsanordnung**

(71) Anmelder: Schlobohm, Wolfgang, 27412 Kirchtimke (DE)
(72) Erfinder: Schlobohm, Wolfgang, 27412 Kirchtimke (DE); Postels, Johann, 27412 Kirchtimke (DE); Jaap, Hans-Joachim, 27404 Zeven (DE); Hellmers, Heino, 48351 Everswinkel (DE); Dorn, Carsten Prof. Dr., 28757 Bremen (DE)
(74) Vertreter: Hansen, Jochen

(57) **Zusammenfassung**

Die Erfindung betrifft eine Ladungssicherungsanordnung (1) umfassend ein Netzsystem (2) mit einer Transportplattform (3) als Sicherung und Stabilisierung von Fracht-/Stückgütern und/oder palettierten Stückgütern auf der Transportplattform, wobei das Netzsystem wenigstens zwei Einzelnetze (21,22,23,24) aufweist, die miteinander verbindbar und zusammenspannbar sind, wobei die Einzelnetze als flächige Sicherungsnetze aus horizontalen Gurten (25) und kreuzenden Gurten (26) ausgebildet sind, wobei die Einzelnetze wenigstens zwei parallel zueinander angeordnete horizontale und zwei parallel zueinander angeordnete die horizontalen Gurte kreuzende Gurte aufweisen, wobei die kreuzenden Gurte ein Befestigungsende und ein Spannende aufweisen, wobei am Befestigungsende eine nicht spannbare Verbindungsanordnung zur Befestigung an einem Zurrpunkt der Transportplattform und am Spannende eine Spannvorrichtung und/oder eine Kopplungsanordnung, jeweils zur Kopplung und Verbindung mit einem weiteren Spannende vorgesehen ist, und die horizontalen Gurte Losenden, Klemmverbindungsenden und/oder Spannvorrichtungen aufweisen, wobei die Losenden zum Verbinden zweier Einzelnetze über Spanngurte, die Klemmverbindungsenden zum Verbinden zweier Einzelnetze miteinander und die Spannvorrichtungen zum Verbinden und/oder Verspannen zweier Einzelnetze ausgebildet sind.

## Beschreibung

Die Erfindung betrifft eine Ladungssicherungsanordnung umfassend ein Netzsystem mit einer Transportplattform als Sicherung und Stabilisierung von Fracht-/Stückgütern und/oder palettierten Stückgütern auf der Transportplattform.

Aus dem Stand der Technik sind unterschiedliche Anordnungen bekannt, um Ladungen auf einer Transportplattform, wie beispielsweise einer Palette, einer Ladefläche eines LKW's oder dergleichen gegen Wegrutschen und allgemein sich Bewegen zu sichern. Hierzu werden in der Regel einfache Überwurfsicherungsnetze verwendet, die an vorgegebenen Zurrpunkten der Transportplattform befestigt werden und dann mittels Spannvorrichtungen heruntergezurrt werden. Alternativ zu den Überwurfsicherungsnetzen sind Spanngurte bekannt, mit Hilfe derer die Ladung auf einer Transportplattform sicher verzurrt werden kann.

Problematisch am Stand der Technik ist der erhebliche zeitliche Aufwand, um die Ladung zu sichern, wobei dieses beim Be- und auch beim Entladen eine große Rolle spielt. Zudem ist die Flexibilität bei einem einzigen Überwurfsicherungsnetz nicht gegeben, da immer das gesamte Überwurfsicherungsnetz verwendet werden muss, um auch nur kleine Ladungen auf einer Transportplattform zu sichern.

Der vorliegenden Erfindung liegt die Aufgabe zugrunde, eine Ladungssicherungsanordnung aufzuzeigen, die es ermöglicht, eine ausreichende Seitenstabilisierung von Fracht-/Stückgütern und/oder palettierten Stückgütern auf einer Transportplattform für den Güterverkehr sicherzustellen und so die Ladung zu sichern. Hierbei wird insbesondere auch die Teilbeladung berücksichtigt, wobei insgesamt eine Reduzierung des Zeiteinsatzes zum Be- und Entsichern der auf der Transportplattform befindlichen Ladung im Vordergrund steht. Eine weitere Aufgabe der Erfindung ist es, die Ladungssicherungsanordnung derart auszubilden, dass sie zum einen nicht über die Ladung geworfen werden muss und zum anderen sehr flexibel ist, so dass einzelne Fracht- und Stückgüter aus der Ladung entnehmbar sind, ohne dabei große Teile des Netzes von der Transportplattform lösen zu müssen bzw. ein stufenweises Be- und Entladen zu ermöglichen.

Gelöst werden diese Aufgaben mit einer Ladungssicherungsanordnung nach Anspruch 1.

Das Netzsystem weist wenigstens zwei Einzelnetze auf, die miteinander verbindbar und zusammenspannbar sind, wobei die Einzelnetze als flächige Sicherungsnetze aus horizontalen Gurten und kreuzenden Gurten ausgebildet sind, wobei die Einzelnetze wenigstens zwei parallel zueinander angeordnete horizontale und zwei parallel zueinander angeordnete die horizontalen Gurte kreuzende Gurte aufweisen, wobei die kreuzenden Gurte ein Befestigungsende und ein Spannende aufweisen, wobei am Befestigungsende eine nicht spannbare Verbindungsanordnung zur Befestigung an einem Zurrpunkt der Transportplattform und am Spannende eine Spannvorrichtung und/oder eine Kopplungsanordnung, jeweils zur Kopplung und Verbindung mit einem weiteren Spannende vorgesehen ist, und die horizontalen Gurte Losenden, Klemmverbindungsenden und/oder Spannvorrichtungen aufweisen, wobei die Losenden zum Verbinden zweier Einzelnetze über Spanngurte, die Klemmverbindungsenden zum Verbinden zweier Einzelnetze miteinander und die Spannvorrichtungen zum Verbinden und/oder Verspannen zweier Einzelnetze ausgebildet sind.

Durch die besondere Zusammenstellung der zuvor genannten Merkmale des Netzsystems ist es möglich, an wenigstens zwei Stellen seitlich in die auf der Transportplattform liegende Fracht- und Stückgüterladung einzugreifen, nachdem das Netzsystem an den Stellen geöffnet wird, an denen die wenigstens zwei Einzelnetze miteinander verbunden sind. Zudem besteht die Möglichkeit von oben auf die Fracht- und Stückgüterladung zuzugreifen, da die Einzelnetze des Netzsystems nicht über die gesamte Ladung gespannt sind. Die Einzelnetze werden um die Ladung gespannt und werden über die Ladung lediglich verspannt, was für eine ausreichende Seitenstabilität beim Transport sorgt.

Die Einzelnetze, bestehend aus den horizontalen und dazu kreuzenden Gurten, die im Wesentlichen vertikal angeordnet sind, können abschnittsweise um die Ladung herum gelegt werden, im Anschluss miteinander verbunden werden und im letzten Schritt erst miteinander verspannt werden.

Da das Beladen einer Transportplattform immer abschnittsweise von statten geht, kann bereits nach Beginn der Beladung der Transportplattform mit dem Sichern der Ladung begonnen werden, in dem ein erstes Einzelnetz über die bereits positionierten Fracht- und Stückgüter seitlich angebracht wird. Während der fortlaufenden Beladung der Transportplattform mit weiteren Fracht- und Stückgütern werden weitere Einzelnetze an das erste angebrachte Einzelnetz angefügt, wobei dies beispielsweise über Klemmverbindungen erfolgt.

Selbstverständlich ist der erste Schritt beim Anbringen eines Einzelnetzes das Einhaken der nicht spannbaren Verbindungsanordnung am Befestigungsende der kreuzenden Gurte an die Zurrpunkte der Transportplattform. Im Anschluss kann das zu positionierende Einzelnetz sehr gut über die doch immer wieder in Form und Ausmaß vorliegenden unterschiedlichen Fracht- und Stückgüter angelegt werden, so dass senkrechte Gurtbänder nicht direkt auf Ecken sitzen.

Bei flachen Fracht- und Stückgütern werden nicht zu verwendende Abschnitte der Einzelnetze einfach eingeklappt und von Folgenetzen zumindest teilweise überdeckt, so dass es keine störenden Einflüsse gibt.

Die besonders einfache Konstruktion der Einzelnetze als simples flächiges Sicherungsnetz ist kostengünstig herstellbar und zudem sehr flexibel in der Anpassung an die zu sichernden Fracht- und Stückgüter auf der Transportplattform. Zudem sind die Einzelnetze leicht verstaubar, wenn diese nicht benötigt werden.

Zu einer vorgegebenen Transportplattform kann ein Satz Einzelnetze standardisiert ausgegeben werden, so dass sämtliche Zustände von Leerfahrt, über Minimalbeladung bis hin zu einer maximalen Ausnutzung der Transportplattform mit den mitgenommenen Einzelnetzen realisierbar sind.

Es ist zudem auch nicht notwendig, die an den Zurrpunkten befestigten Verbindungsanordnungen am Befestigungsende der kreuzenden Gurte zu spannen oder besonders zu fixieren, da das Verspannen oberhalb der Ladung bzw. an den Seiten und eben nicht am Boden der Transportplattform erfolgt.

Die Einzelnetze können über Spannvorrichtungen an den Spannenden miteinander verspannt werden, so dass eine um die Fracht- und Stückgüter umlaufende Verspannung bei Teilbeladung erfolgen kann. Hierzu sind unterschiedlich Konstellationen möglich, so dass eine sehr hohe Flexibilität in Bezug auf die Beladung der Transportplattform möglich wird.

Zur weiteren Seitenstabilisierung werden die um die Ladung gelegten Einzelnetze über die Ladung mit Spanngurten bzw. Spannvorrichtungen miteinander verspannt, wobei das Verspannen linear oder diagonal erfolgen kann.

Die Befestigungsenden sind allseitig umlaufend an Zurrpunkten der Transportplattform angeschlagen. Die Befestigung kann lösbar als auch dauerhaft fest ausgestaltet sein. Bei einer lösbaren Verbindung können Einzelnetze bei Nichtbedarf abgeräumt werden. Bei einer dauerhaft festen Ausgestaltung der Anbindung der Einzelnetze an den Zurrpunkten können die Einzelnetze bei Nichtverwendung beispielsweise unter die Transportplattform verbracht werden, so dass eine vierseitige Beladung der Transportplattform möglich ist. Hierzu bedarf es lediglich eines leichten Überhanges der Transportplattformoberfläche über deren Tragwerkskonstruktion.

Die Zurrpunkte der Transportplattform können auch als Airlineschiene, Zurrschiene oder als Doppelstop-Sicherungsschiene ausgeführt sein.

Die Transportplattform kann eine Palette, Sammelpalette oder eine Ladefläche eines Transportmittels sein. Zu den Paletten sind Einweg-, Mehrweg- als auch Sonderpaletten zu zählen. Sammelpaletten sind großflächige Transportplattformen zur Beförderung einer Vielzahl von Fracht- und Stückgütern als auch von auf Paletten vorkonfektionierten Fracht- und Stückgütern. Insbesondere werden die Sammelpaletten im Güterfernverkehr eingesetzt, um von einem zum anderen Umschlagspunkt Waren zu transportieren. Derartige Sammelpaletten werden sowohl im Straßen-, See-, Flug- als auch Schienenverkehr eingesetzt.

Bei einer Ausgestaltung der Transportplattform als Ladefläche eines Transportmittels, beispielsweise eines LKW's, können die Sicherungsnetze temporär oder fixiert an der Ladefläche des LKW's angeschlagen sein und an den seitlichen Ladebordwänden bzw. dem LKW-Aufbau bei Nichtbenutzung angehängt werden. Es kann zudem ein Aufnahmesystem im LKW vorgesehen sein, das die Netze bei Nichtbenutzung an die Seite bzw. nach oben zieht, so dass die darunter befindliche Ladefläche zugänglich wird, ohne dass die Netze dabei abgebaut werden müssen.

Zusätzlich sind an den horizontalen und/oder kreuzenden Gurten Spanngurtaufnahmen zur Aufnahme von temporär anzubringenden Spanngurten und/oder Spanngurte vorgesehen. Diese zusätzlichen Spanngurte verbessern weiter die Seitenstabilität der Fracht.

Nachfolgend werden Ausführungsbeispiele der Erfindung anhand der beiliegenden Zeichnungen detailliert beschrieben.

Darin zeigen:
- Fig. 1: eine schematische Darstellung eines ersten Ausführungsbeispiels der erfindungsgemäßen Ladungssicherungsanordnung in einer räumlichen Seitenansicht;
- Fig. 2: eine schematische Darstellung eines zweiten Ausführungsbeispiels der erfindungsgemäßen Ladungssicherungsanordnung mit Fracht- und Stückgütern in einer räumlichen Schrägansicht;
- Fig. 3: eine schematische Darstellung eines dritten Ausführungsbeispiels der erfindungsgemäßen Ladungssicherungsanordnung in einer Draufsicht;
- Fig. 4: eine schematische Darstellung eines Einzelnetzes mit am Spannende der kreuzenden Gurte vorgesehenen Spannvorrichtungen und Klemmverbindungsenden an den horizontalen Gurten und
- Fig. 5: eine schematische Darstellung eines weiteren Einzelnetzes mit am Spannende der kreuzenden Gurte vorgesehenen Kopplungsanordnung und Klemmverbindungsenden an den horizontalen Gurten.

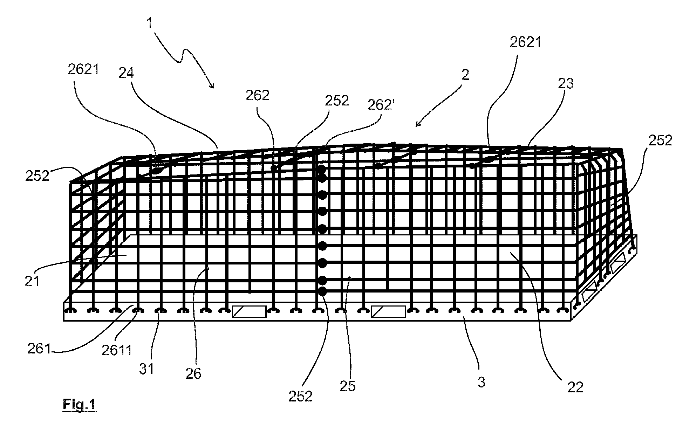

Fig. 1 zeigt eine schematische Darstellung eines ersten Ausführungsbeispiels der erfindungsgemäßen Ladungssicherungsanordnung 1 in einer räumlichen Seitenansicht.

Die Ladungssicherungsanordnung 1 besteht aus einer Transportplattform 3 und einem darauf angeordneten Netzsystem 2.

Das Netzsystem 2 ist in diesem Ausführungsbeispiel mit vier Einzelnetzen 21, 22, 23 und 24 ausgeführt, die miteinander umlaufend verbunden sind. Die Einzelnetze 21, 22, 23, 24 sind mit ihren Befestigungsenden 261 und der daran vorgesehenen Verbindungsanordnung 2611 an den Zurrpunkten 31 der Transportplattform 3 allseitig umlaufend angeschlagen.

Die Einzelnetze 21, 22, 23, 24 sind miteinander über Klemmverbindungsenden 252 verbunden und zum Teil verspannt. Verspannt sind die Einzelnetze 21, 22, 23, 24 über Spannvorrichtungen 2621 oberhalb der hier nicht dargestellten Fracht- und Stückgüter 4, wobei die Spannvorrichtungen 2621 zwei Einzelnetze 21 und 24 an deren Spannenden 262 und 262' miteinander verbinden und verspannen.

Die Einzelnetze 21, 22, 23, 24 bestehen aus horizontalen Gurten 25 und kreuzenden Gurten 26.

Im Weiteren werden für gleiche Elemente die gleichen Bezugszeichen wie in Fig. 1 verwendet. Zu deren prinzipieller Funktion wird auf Fig. 1 verwiesen.

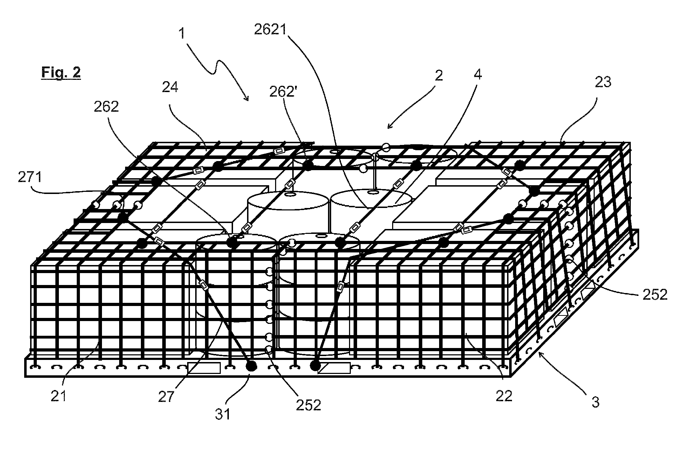

Fig. 2 zeigt eine schematische Darstellung eines zweiten Ausführungsbeispiels der erfindungsgemäßen Ladungssicherungsanordnung 1 mit Fracht- und Stückgütern 4 in einer räumlichen Schrägansicht.

Hier ist erneut die Ladungssicherungsanordnung 1, bestehend aus einem Netzsystem 2 und einer Transportplattform 3, dargestellt. In diesem Fall ist die Transportplattform 3 vollständig mit Fracht- und Stückgütern 4, beispielsweise Fässer und auf Paletten angeordnete Einzelfrachtgüter sowie größere Stückgüter, belegt.

Allseitig umlaufend sind vier Einzelnetze 21, 22, 23, 24 um die Fracht- und Stückgüter 4 mit ihren Befestigungsenden 261 an den Zurrpunkten 31 der Transportplattform 3 angeschlagen und miteinander über Klemmverbindungsenden 252 verbunden. Dies stellt die maximale flächige Beladung der Transportplattform 3 dar, so dass alle vier Netze maximal verwendet werden können.

Die vier Einzelnetze 21, 22, 23, 24 sind jeweils über deren Spannenden 262, 262' mit Hilfe von Spannvorrichtungen 2621 miteinander oberhalb der Fracht- und Stückgüter 4 verbunden und verspannt.

Zusätzlich sind diagonal angeordnete Spanngurte 27 an Spanngurtaufnahmen 271 der Einzelnetze 21, 22, 23, 24 an Zurrpunkten 31 der Transportplattform 3 angeordnet, die eine zusätzliche Abstützung bzw. Sicherung der Fracht- und Stückgüter 4 während des Transports gewährleisten.

Grundsätzlich können Spanngurte 27 mit jeweils zwei Spanngurtspannern verwendet werden, um flexibler in der Bedienung der Spanngurte zu sein, so dass immer ein Spanngurtspanner in unmittelbarer Nähe des Randbereiches der Transportplattform 3 vorgesehen ist.

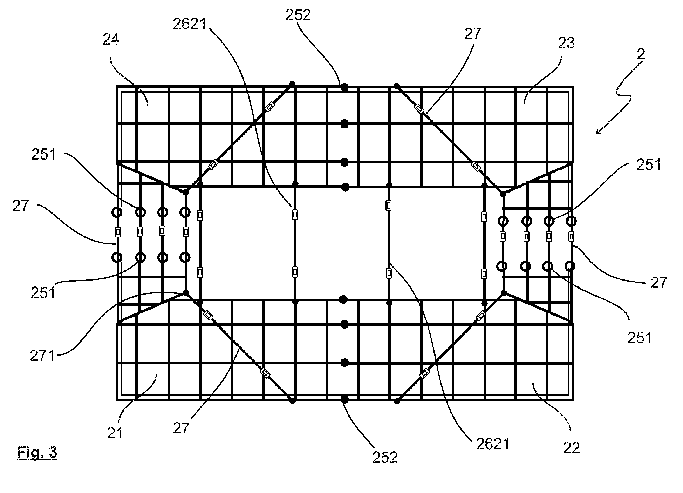

In Fig. 3 ist eine schematische Darstellung eines dritten Ausführungsbeispiels der erfindungsgemäßen Ladungssicherungsanordnung 1 in einer Draufsicht dargestellt.

Hierbei sind die Einzelnetze 21 und 24 sowie 22 und 23 jeweils über an den jeweiligen Losenden 251 angeordneten Spanngurten 27 verbunden.

Die Einzelnetze 21 und 22 sowie 23 und 24 sind über Klemmverbindungsenden 252 miteinander verbunden. Zur weiteren Reduzierung von Einzelnetzlängen könnte auch diese jeweilige Verbindung mittels Losenden 251 und Spanngurten 27 realisiert werden, wobei auch größere Strecken überbrückt werden könnten.

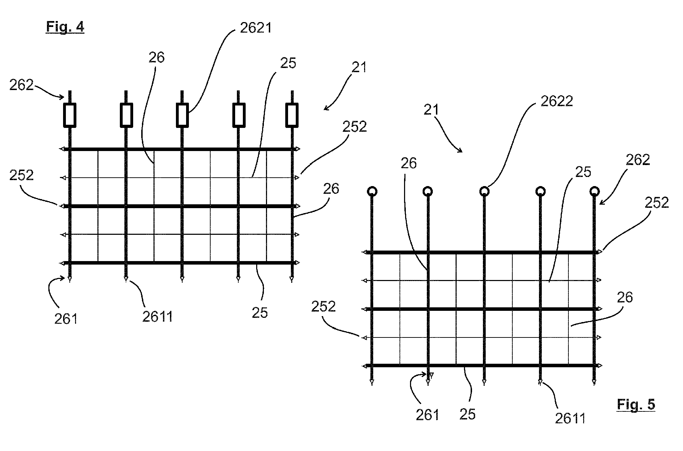

In Fig. 4 ist eine schematische Darstellung eines Einzelnetzes 21 mit am Spannende 262 der kreuzenden Gurte 26 vorgesehenen Spannvorrichtungen 2621 und Klemmverbindungsenden 252 an den horizontalen Gurten 25 dargestellt.

Die an den Spannenden 262 vorgesehenen Spannvorrichtungen 2621 können mit einer weiteren Spannvorrichtung 2621 eines weiteren Einzelnetzes 22 verbunden werden, so dass zwei Spannhilfen zum Verspannen der Einzelnetze zueinander vorgesehen sind, so dass der Packer bzw. der verantwortliche Ladungssicherer gut an die Spannhilfe von der Seite herankommt.

Es ist auch ein abschnittsweises Beladen der Transportplattform 3 mit sofortigem Auflegen und Verspannen von den Einzelnetzen möglich, so dass abschnittsweise beladen und gleichzeitig verspannt wird.

Die unterschiedliche grafische Darstellung der Gurte 25, 26 hat lediglich die Bedeutung, dass neben Hauptgurten 25, 26 auch dünnere Hilfsgurte verwendet werden können.

Fig. 5 zeigt eine schematische Darstellung eines weiteren Einzelnetzes 21 mit am Spannende 262 der kreuzenden Gurte 26 vorgesehenen Kopplungsanordnung 2622 und Klemmverbindungsenden 252 an den horizontalen Gurten 25.

Die Klemmverbindungsenden 252 sind derart ausgebildet, dass sie die Einzelnetze umlaufend miteinander verbinden können. Alternativ können auch Spanngurte über hier nicht dargestellte Losenden 251 die Einzelnetze in horizontaler Ebene miteinander verbinden.

### Bezugszeichenliste

- 1: Ladungssicherungsanordnung
- 2: Netzsystem
- 21, 22, 23, 24: Einzelnetz
- 25: horizontaler Gurt
- 251: Losende
- 252: Klemmverbindungsende
- 26: kreuzender Gurt
- 261: Befestigungsende
- 2611: Verbindungsanordnung
- 262, 262': Spannende
- 2621: Spannvorrichtung
- 2622: Kopplungsanordnung
- 27: Spanngurt
- 271: Spanngurtaufnahme
- 3: Transportplattform
- 31: Zurrpunkt
- 4: Fracht-/Stückgüter

## Patentansprüche

1. Ladungssicherungsanordnung (1) umfassend ein Netzsystem (2) mit einer Transportplattform (3) als Sicherung und Stabilisierung von Fracht-/Stückgütern (4) und/oder palettierten Stückgütern (4) auf der Transportplattform (3), **dadurch gekennzeichnet, dass** das Netzsystem (2) wenigstens zwei Einzelnetze (21, 22, 23, 24) aufweist, die miteinander verbindbar und zusammenspannbar sind, wobei die Einzelnetze (21, 22, 23, 24) als flächige Sicherungsnetze aus horizontalen Gurten (25) und kreuzenden Gurten (26) ausgebildet sind, wobei
- die Einzelnetze (21, 22, 23, 24) wenigstens zwei parallel zueinander angeordnete horizontale (25) und zwei parallel zueinander angeordnete die horizontalen Gurte (25) kreuzende Gurte (26) aufweisen, wobei
- die kreuzenden Gurte (26) ein Befestigungsende (261) und ein Spannende (262) aufweisen, wobei
- am Befestigungsende (261) eine nicht spannbare Verbindungsanordnung (2611) zur Befestigung an einem Zurrpunkt (31) der Transportplattform (3) und
- am Spannende (262) eine Spannvorrichtung (2621) und/oder eine Kopplungsanordnung (2622), jeweils zur Kopplung und Verbindung mit einem weiteren Spannende (262') vorgesehen ist,
und
- die horizontalen Gurte (25) Losenden (251), Klemmverbindungsenden (252) und/oder Spannvorrichtungen (2621) aufweisen, wobei
- die Losenden (251) zum Verbinden zweier Einzelnetze (21, 22, 23, 24) über Spanngurte (27),
- die Klemmverbindungsenden (252) zum Verbinden zweier Einzelnetze (21, 22, 23, 24) miteinander und
- die Spannvorrichtungen (2621) zum Verbinden und/oder Verspannen zweier Einzelnetze (21, 22, 23, 24) ausgebildet sind.

2. Ladungssicherungsanordnung nach Anspruch 1,
**dadurch gekennzeichnet, dass**
die Befestigungsenden (261) allseitig umlaufend an Zurrpunkten (31) der Transportplattform (3) angeschlagen sind.

3. Ladungssicherungsanordnung nach Anspruch 1 oder 2,
**dadurch gekennzeichnet, dass**
die Transportplattform (3) eine Palette, Sammelpalette oder eine Ladefläche eines Transportmittels ist.

4. Ladungssicherungsanordnung nach Anspruch 1, 2 oder 3,
**dadurch gekennzeichnet, dass**
an den horizontalen (25) und/oder kreuzenden Gurten (26) Spanngurtaufnahmen (271) zur Aufnahme von temporär anzubringenden Spanngurten (27) und/oder Spanngurte (27) vorgesehen sind.
